# EUROPÄISCHE PATENTSCHRIFT

(11) **EP 0 532 453 B1**
(45) Veröffentlichungstag und Bekanntmachung des Hinweises auf die Patenterteilung: **18.09.1996**
(21) Anmeldenummer: 92710027.1
(22) Anmeldetag: 09.09.1992
(51) Int. Cl.: F23N 1/00, G05D 16/20

(54) **Servodruckregler**
Gas pressure regulator
Régulateur de pression de gaz

(30) Priorität: 09.09.1991 AT 1778/91
(43) Veröffentlichungstag der Anmeldung: 17.03.1993
(73) Patentinhaber: Joh. Vaillant GmbH u. Co., D-42810 Remscheid (DE); n.v. Vaillant s.a., B-1620 Drogenbos (BE); VAILLANT S.A.R.L, F-94537 Rungis Cedex (FR); VAILLANT Ges.m.b.H, A-1233 Wien (AT); Vaillant Ltd., Rochester Kent ME2 4EZ (GB); Vaillant B.V., NL-1105 BJ Amsterdam (NL); Vaillant GmbH, CH-8953 Dietikon 1 (CH)
(72) Erfinder: Auer, Otto Heinrich, W-5860 Iserlohn (DE); Burgdorf, Achim, W-5632 Wermelskirchen (DE); Friedrichs, Detlef, W-5609 Hückeswagen (DE); Marrek, Lothar, W-5632 Wermelskirchen (DE); Sonje, Bernd, W-5630 Remscheid (DE)
(74) Vertreter: Heim, Johann-Ludwig, Dipl.-Ing.

(56) Entgegenhaltungen:
- DE-U- 9 017 327
- PATENT ABSTRACTS OF JAPAN vol. 11, no. 392 (M-653)22. Dezember 1987 & JP-A-62 158 918

## Beschreibung

Die Erfindung bezieht sich auf einen Servodruckregler gemäß dem Oberbegriff des Patentanspruchs.

Für verschiedene Gasarten anpaßbare Servodruckregler sind zum Beispiel durch die EP-A-39 000 und das DE-U-9 017 327 bekanntgeworden. Bei dieser Anpassung des Servodruckreglers an eine andere Gasart, zum Beispiel bei einem Wechsel von zum Beispiel Erdgas auf Flüssiggas, ist gemäß dem oben genannten DE-U vorgesehen, den Elektromagneten auszutauschen, wobei jeder Elektromagnet eine spezielle Spule aufweist. Dies ist erforderlich wegen des Umstandes, daß, bedingt durch die unterschiedlichen Anschlußdrücke, der Kraftbedarf des Magneten bei Erdgas gegenüber Flüssiggas nur ca. 1/10 beträgt.

Bei solchen Austauschvorgängen ergibt sich jedoch stets das Problem der sehr aufwendigen Einstellung eines Mindestgasdurchsatzes, insbesondere eines Überzündgasdurchsatzes.

Ziel der Erfindung ist es, diese Nachteile zu vermeiden und einen Servodruckregler der eingangs erwähnten Art vorzuschlagen, bei dem eine schnelle und bequeme Umstellung auf eine andere Gasart und eine sehr einfache Einstellung des Mindestgasdurchsatzes möglich ist.

Erfindungsgemäß wird dies durch die kennzeichnenden Merkmale des Patentanspruchs erreicht.

Der zweiteilige Aufbau des den Elektromagneten aufnehmenden Gehäuses ermöglicht einen einfachen Austausch des Elektromagneten bei einer Anpassung des Servodruckreglers an eine andere Gasart. Durch die Schraubverbindung der beiden Gehäuseteile läßt sich der den Mindestgasdurchsatz bestimmende Ankeranschlag sehr einfach durch Variation der Einschraubtiefe einstellen.

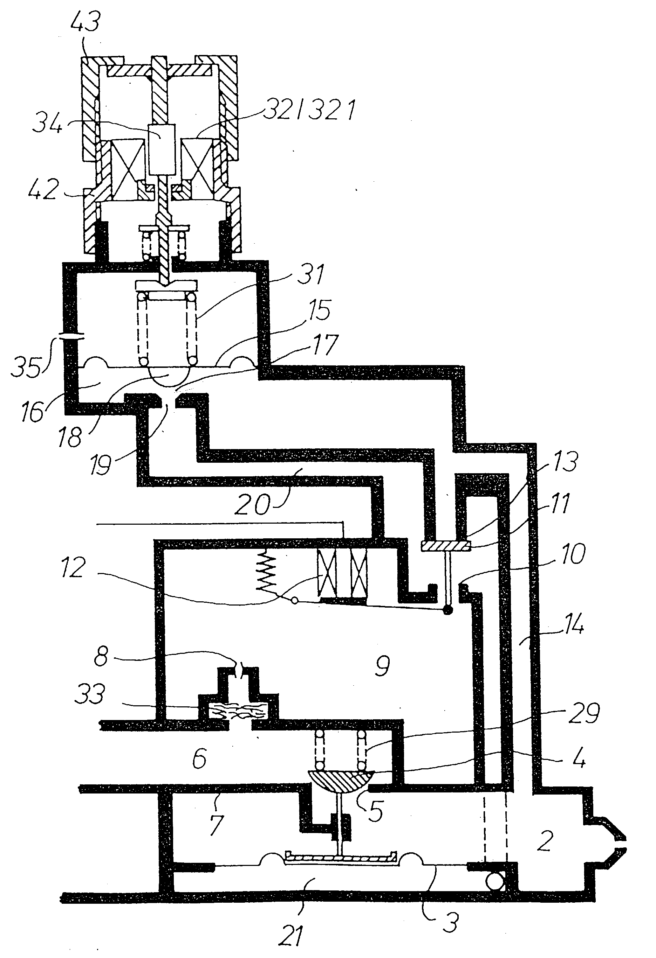

Die Erfindung wird nun anhand der Zeichnung näher erläutert.

Dabei zeigt die einzige:

Fig. schematisch einen erfindungsgemäßen Servodruckregler.

Der dargestellte Gasdruckregler weist eine mit einer Gaszufuhrleitung verbundene Einlaßkammer 6 und eine Auslaßkammer 2 auf, die von einer Membrane 3 begrenzt ist, die mit einem Ventilkörper 4 verbunden ist, der mit einem Ventilsitz 5 zusammenwirkt, der eine Öffnung der die Einlaßkammer 6 von der Auslaßkammer 2 trennenden Wand 7 begrenzt.

Die Einlaßkammer 6 ist über einen Filter 33 und eine Drossel 8 mit einer Kammer 9 verbunden, die eine mit einem Ventilsitz 10 versehene Öffnung aufweist, die mit einem Ventilkörper 11 eines Schaltmagneten 12 zusammenwirkt. Dieser Schaltmagnet 12, beziehungsweise dessen Ventilkörper 11 wirkt noch mit einem weiteren Ventilsitz 13 zusammen, der eine Öffnung einer mit der Auslaßkammer 2 verbundenen Steuerleitung 14 begrenzt. Diese Steuerleitung 14 führt weiter zu einer von der Hilfsmembrane 15 begrenzten Regelkammer 16, die weiter über ein Steuerventil 17, dessen Ventilkörper 18 mit einem Ventilsitz 19 zusammenwirkt, der eine Öffnung der Regelkammer 16 begrenzt, die diesen mit einer Steuerleitung 20 verbindet, die in den von der Membrane 3 von der Einlaßkammer 2 abgetrennten Steuerkammer 21 führt.

Auf die Membrane 15 wirkt weiter eine Feder 31 ein, die an dem Anker 34 eines austauschbaren Elektromagneten 32 beziehungsweise 321 über einen Federteller abgestützt ist, wobei der Raum oberhalb der Hilfsmembrane 15 über eine Drosselöffnung 35 mit der Umgebung verbunden ist.

In der Ruhestellung verschließt der Schaltmagnet 12, beziehungsweise dessen Ventilkörper 11 die Kammer 9. Dadurch ergeben sich über die Auslaßkammer 2 und die Steuerleitungen 14 und 20 an beiden Seiten der Membrane 3 gleiche Druckverhältnisse, so daß die Feder 29, die Membrane nach unten drückt und damit den Ventilkörper 4 gegen den Ventilsitz 5 drückt und damit ein Abströmen des Gases aus der Einlaßkammer 6 unterbindet.

Nach dem Umschalten des Schaltmagneten 12 beziehungsweise dessen Ventilkörper 11, wird die Verbindung der Kammer 9 mit der Steuerleitung 20 geöffnet und die Verbindung der Steuerleitung 20 mit der Steuerleitung 14 unterbunden, wie dies in der Fig. dargestellt ist.

Dadurch kann Gas über die Drossel 8, den Raum 9, den Ventilsitz 10 und die Steuerleitung 20 in die Steuerkammer 21 einströmen, wodurch der Ventilkörper 4 entgegen der Kraft der Feder 29 vom Ventilsitz 5 abgehoben wird und das Gas in die Auslaßkammer 2 einströmen und von dort zum nicht dargestellten Brenner strömen kann.

Die Hilfsmembrane 15 wird an ihrer Unterseite vom Auslaßgasdruck, der von der zwischen dem Ventilsitz 5 und dem Ventilkörper 4 verbleibenden Spalt abhängt, beaufschlagt und hat daher die Tendenz sich nach oben zu wölben und damit das Ventil 17 zu öffnen. Dem wirkt die Feder 31 entgegen, die je nach der an dem Elektromagneten 32 beziehungsweise 321 anliegenden Spannung die Hilfsmembrane 15 entgegen dem Auslaßgasdruck mehr oder weniger beaufschlagt.

Es stellt sich daher ein entsprechender Gleichgewichtszustand ein, in dem das Ventil 17 um ein gewisses Maß geöffnet ist, so daß über dieses Ventil Gas aus der Kammer 9 und der Steuerkammer 21, letzteres über die Steuerleitung 20 in die Regelkammer 16 einströmen und von dort zur Auslaßkammer 2 strömen kann. Dies bewirkt ein Absinken des Druckes in der Steuerkammer 21 und damit eine Schließbewegung des Ventilkörpers 4. Letzteres hat zur Folge, daß der Druck in der Einlaßkammer 6 und damit auch in der Kammer 9 und in weiterer Folge auch in der Steuerkammer 21 steigt, was zu einer Öffnungsbewegung des Ventilkörpers 4 führt. Es stellt sich somit ein Gleichgewichtszustand ein, der von der Stellung des Ventiles 17 abhängt, das seinerseits von der an dem Elektromagneten 32 anliegenden Spannung abhängt, der die Stellung des Ankers 34 und mit diesem des Federtellers und damit die Vorspannung der Hilfsmembrane 15 ändert, wobei der Ventilkörper 18 und der Ventilsitz 19 eine Drosselstelle, beziehungsweise ein Steuerventil bilden.

Zwischen der auf den Anker 34 des Elektromagneten 32 beziehungsweise 321 einwirkenden Magnetkraft und dem durch die Spule des Elektromagneten 32 beziehungsweise 321 fließenden Strom ergibt sich ein im wesentlichen proportionaler Zusammenhang. Je nach der Größe des Stromes ergeben sich daher unterschiedliche Kräfte. Folglich lassen sich die unterschiedlichsten Kraftanforderungen bei Änderung der Gasart durch Austausch des Elektromagneten realisieren. Dazu ist der Elektromagnet 32, 321 in einem zweiteiligen Gehäuse 42, 43 angeordnet, dessen beide Teile 42 und 43 miteinander verschraubt sind. Das Gehäuse 42, 43 wiederum ist mit dem die Regelkammer 16 begrenzenden Reglergehäuse verschraubt. Weiter dient der einschraubbare Gehäuseteil 43 als Anschlag für den Anker 34, über den eine minimale Gasmenge, zum Beispiel eine Überzündgasmenge, in dessen abgefallenem Zustand einstellbar ist. Diese Einstellung der Mindestgasmenge erfolgt dabei durch mehr oder weniger tiefes Einschrauben des Gehäuseteiles 43 in den Gehäuseteil 42.

## Patentansprüche

1. Für verschiedene Gasarten beziehungsweise Gasdrücke adaptierbarer Servodruckregler, der mit einem diesen steuernden Elektromagneten versehen ist, dessen Anker über eine Feder auf eine Membrane einer Regelkammer des Servodruckreglers einwirkt und dessen Spule von einer Spannungsquelle versorgbar ist, wobei der Elektromagnet (32, 321) austauschbar gehalten ist und für jede Gasart beziehungsweise für jeden Nenngasdruck eine geeignete Spule (53, 531) aufweist, **dadurch gekennzeichnet,** daß der Elektromagnet (32, 321) in einem zweiteiligen Gehäuse (42, 43) angeordnet ist, dessen beide Teile (42, 43) miteinander verschraubt sind, wobei die Einschraubtiefe einen minimalen Gasdurchsatz, insbesondere einen Überzündgasdurchsatz bestimmt, indem der einzuschraubende Gehäuseteil (43) als Anschlag für den Anker ausgebildet ist.

## Claims

1. Servo pressure controller adaptable to different types of gas and/or gas pressures, provided with an electromagnet controlling the same whose armature acts on a diaphragm of a regulating chamber of the said servo pressure controller via a spring and whose coil is feedable from a voltage source, the said electromagnet (32, 321) being exchangeable and having a suitable coil (53, 531) for each type of gas and/or each nominal gas pressure, **characterized in that** the electromagnet (32, 321) is arranged in a split housing (42, 43) whose two parts (42, 43) are screwed into one another, with the depth of screw engagement determining a minimal gas volume, in particular a volume of gas flow sufficient to ensure a flame at every slot of the burner plate, in that the housing part (43) screwed into the mating part serves as a stop for the armature.

## Revendications

1. Servo-régulateur de pression adaptable à des qualités ou des pressions de gaz différentes, muni d'un électro-aimant réglant son fonctionnement et dont l'armature agit, par l'intermédiaire d'un ressort, sur une membrane d'une chambre du servo-régulateur, et dont la bobine peut être alimentée par une source de tension, l'électro-aimant (32, 321) pouvant être changé et présentant une bobine (53, 531) adaptée à la qualité ou à la pression nominale de gaz donnée, **servo-régulateur caractérisé par le fait** que l'électro-aimant (32, 321) est logé dans un boîtier (42, 43) composé de deux parties (42, 43) vissées l'une dans l'autre, la profondeur de vissage déterminant une quantité minimale de gaz, notamment une quantité de gaz d'allumage, du fait que la partie à visser (43) est conçue comme butée pour l'armature de l'électro-aimant.
